# EUROPEAN PATENT APPLICATION

(11) **EP 3 656 595 A1**
(43) Date of publication of application: **27.05.2020**
(21) Application number: 19209035.5
(22) Date of filing: 14.11.2019
(51) Int. Cl.: B60K 23/08, B60W 50/00

(54) **CONTROL DEVICE FOR DIFFERENTIAL LIMITING DEVICE**

(30) Priority: 21.11.2018 JP 2018218063
(71) Applicant: JTEKT CORPORATION, Osaka-shi, Osaka 542-8502 (JP)
(72) Inventor: TAKAUE, Hiroto, Osaka-shi,, Osaka 542-8502 (JP)
(74) Representative: TBK

(57) **Abstract**

A control device for a differential limiting device is provided. The differential limiting device limits at least one of a difference between rotational speeds of right and left wheels of a vehicle and a difference between rotational speeds of front and rear wheels of the vehicle. The control device includes an electronic control unit (71) configured to obtain crosswind information on a crosswind to which the vehicle is to be subjected in a predetermined region located ahead in a direction of travel of the vehicle, and to perform control to generate a differential limiting force based on the crosswind information.

## Description

### BACKGROUND OF THE INVENTION

### 1. Field of the Invention

The invention relates to a control device for a differential limiting device that limits at least one of the difference between rotational speeds of front and rear wheels and the difference between rotational speeds of right and left wheels.

### 2. Description of Related Art

A differential limiting force control device has been proposed. The differential limiting force control device limits the differential between right and left wheels to restrain undesirable movement of a vehicle toward the right side or the left side caused by disturbance during traveling (see, for example, Japanese Unexamined Patent Application Publication No. 2009-257383 (JP 2009-257383 A)).

The differential limiting force control device described in JP 2009-257383 A includes a wind power detecting unit, a differential, a differential limiting unit, and a differential limiting force control unit. The wind power detecting unit detects wind power received by a part of the vehicle that is located ahead of the center of gravity of the vehicle. The differential differentially transmits the power generated by a power unit to the right and left drive wheels. The differential limiting unit generates a differential counterforce against the differential between the right and left drive wheels to limit the differential provided by the differential. When the wind power detecting unit detects wind power, the differential limiting force control unit controls the differential limiting unit so as to apply the differential counterforce according to the detected wind power.

### SUMMARY OF THE INVENTION

The differential limiting force control device in related art controls the differential limiting force only after it detects wind power. Accordingly, when the vehicle is subjected to a crosswind during driving, the vehicle behavior becomes temporarily unstable, which may make the driver feel uneasy.

The invention provides a control device for a differential limiting device which improves crosswind stability of a vehicle.

An aspect of the invention relates to a control device for a differential limiting device that limits at least one of a difference between rotational speeds of right and left wheels of a vehicle and a difference between rotational speeds of front and rear wheels of the vehicle. The control device includes an electronic control unit configured to obtain crosswind information on a crosswind to which the vehicle is to be subjected in a predetermined region located ahead in a direction of travel of the vehicle, and to perform control to generate a differential limiting force based on the crosswind information.

The control device for the differential limiting device according to the above aspect of the invention improves crosswind stability of the vehicle as compared to the case where a differential limiting force is controlled after the vehicle is subjected to a crosswind.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a configuration diagram schematically illustrating an example of the configuration of a four-wheel drive vehicle including a differential limiting device according to a first embodiment of the invention;
FIG. 2 is a block diagram schematically illustrating an example of the configuration of a control device;
FIG. 3 is a schematic illustration of a vehicle that is subjected to a crosswind;
FIGS. 4A and 4B are schematic illustrations of the vehicle near a tunnel exit;
FIG. 5 is a flowchart illustrating an example of a process that is executed by a control unit of a control device;
FIG. 6 is a configuration diagram schematically illustrating an example of the configuration of a front-wheel drive vehicle according to a second embodiment;
FIG. 7 is a configuration diagram schematically illustrating an example of the configuration of a four-wheel drive vehicle according to a third embodiment;
FIG. 8 is a configuration diagram schematically illustrating an example of the configuration of a four-wheel drive vehicle according to a fourth embodiment; and
FIG. 9 is a configuration diagram schematically illustrating an example of the configuration of a four-wheel drive vehicle according to a fifth embodiment.

### DETAILED DESCRIPTION OF EMBODIMENTS

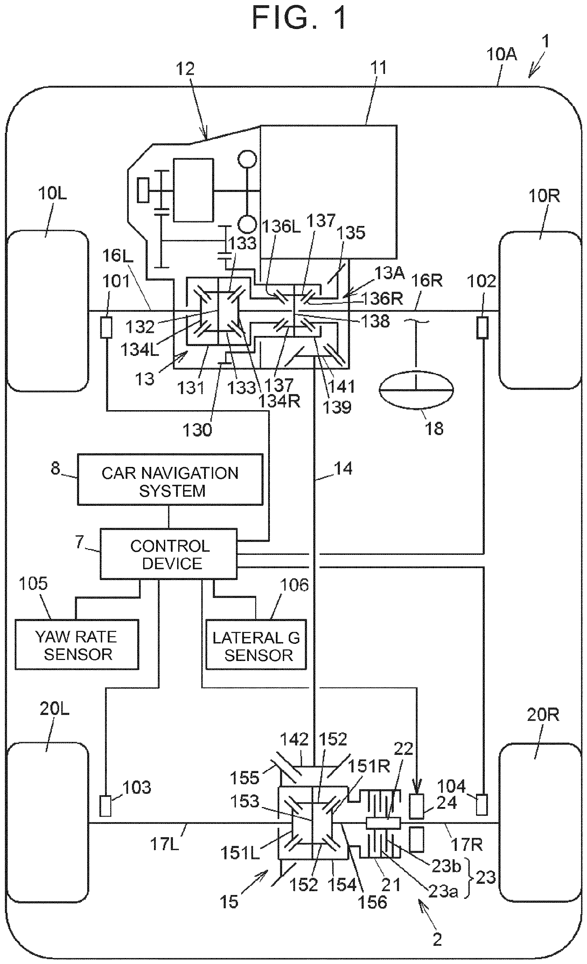

A first embodiment of the invention will be described with reference to FIGS. 1 to 5. Embodiments described below are given as specific examples for carrying out the invention. However, the technical scope of the invention is not limited to these specific forms.

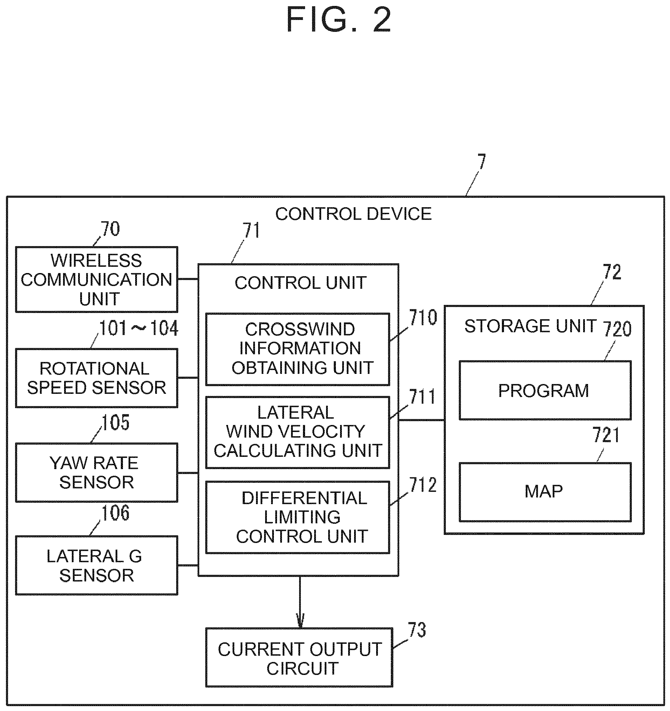

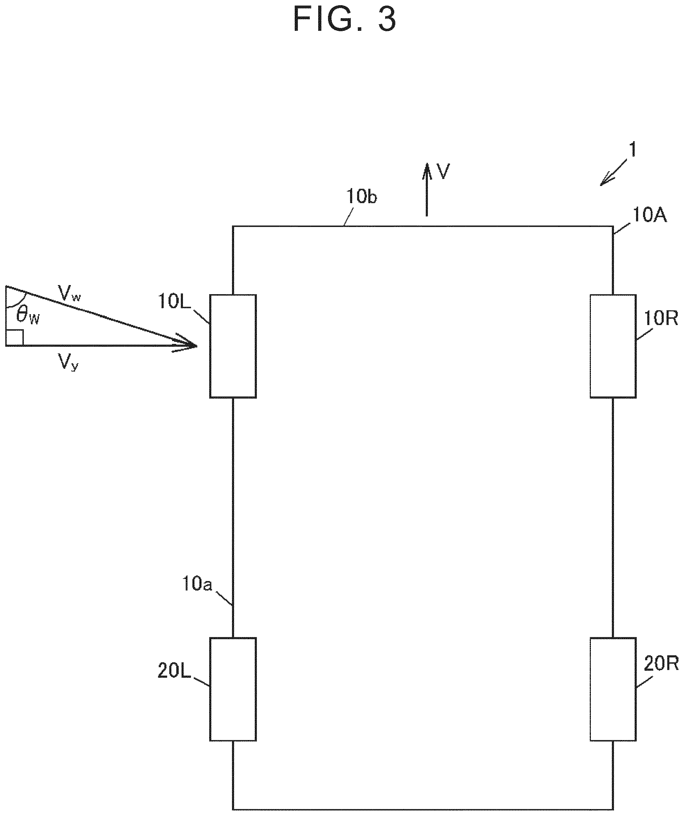

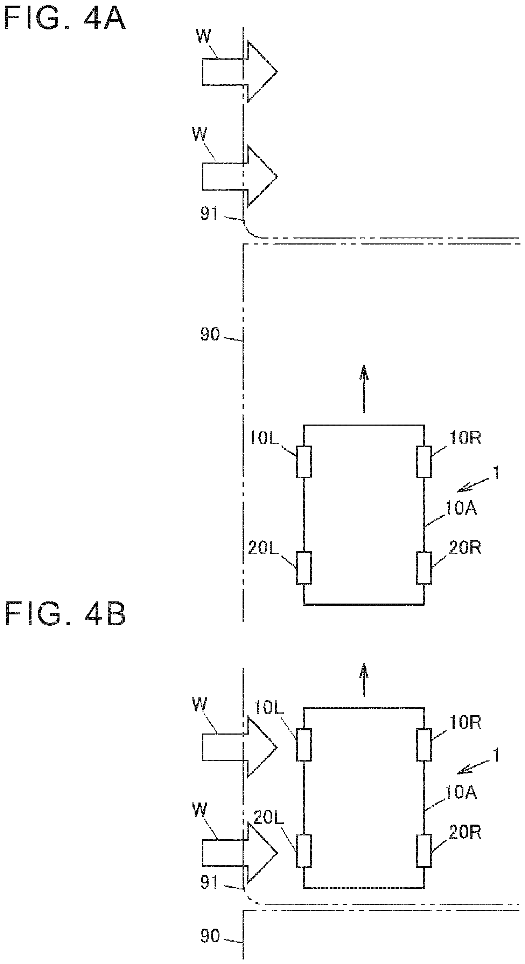

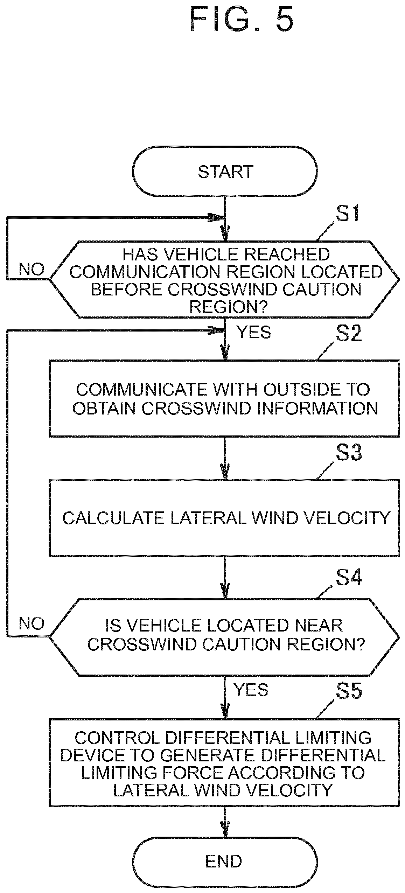

FIG. 1 is a configuration diagram schematically illustrating an example of the configuration of a four-wheel drive vehicle including a differential limiting device according to the first embodiment of the invention. FIG. 2 is a block diagram illustrating an example of a functional configuration of a control device. FIG. 3 is a schematic illustration of a vehicle that is subjected to a crosswind. FIGS. 4A and 4B are schematic illustrations of the vehicle near a tunnel exit. FIG. 5 is a flowchart illustrating an example of a process that is executed by a control unit of a control device.

As shown in FIG. 1, a four-wheel drive vehicle 1 includes an engine 11, a transmission 12, front wheels 10R, 10L, and rear wheels 20R, 20L. The engine 11 is a driving source that generates driving torque that causes the vehicle 1 to travel. The transmission 12 changes the rotational speed of the output of the engine 11. The front wheels 10R, 10L are a pair of right and left main drive wheels to which the driving force of the engine 11 is always transmitted after the rotational speed of the output of the engine 11 is changed by the transmission 12. The rear wheels 20R, 20L are a pair of auxiliary drive wheels to which the driving force of the engine 11 is transmitted according to the vehicle state. The four-wheel drive vehicle 1 is an example of the vehicle and includes a control device 7 described later. The four-wheel drive vehicle 1 including the control device 7 is hereinafter sometimes referred to as the vehicle.

The four-wheel drive vehicle 1 further includes a center differential 13A, a front differential 13, a propeller shaft 14, a rear differential 15, drive shafts 16R, 16L for the right and left front wheels 10R, 10L, drive shafts 17R, 17L for the right and left rear wheels 20R, 20L, and a differential limiting device 2, and the control device 7. The differential limiting device 2 limits the difference between rotational speeds of the right rear wheel 20R and the left rear wheel 20L (i.e., the difference in rotational speed between the right rear wheel 20R and the left rear wheel 20L). The control device 7 controls the differential limiting device 2.

The control device 7 is capable of obtaining various detection values including detection values of rotational speed sensors 101 to 104 and detection value of a yaw rate sensor 105 and a lateral G sensor 106. The rotational speed sensors 101 to 104 detect the rotational speeds of the front wheels 10L, 10R and the rear wheels 20L, 20R, respectively. The control device 7 supplies an electric current to the differential limiting device 2 based on the detection values and a map 721 described later. The differential limiting device 2 generates a differential limiting force according to the electric current supplied from the control device 7. The yaw rate sensor 105 and the lateral G sensor 106 are examples of a detector that detects a vehicle behavior.

The differential limiting device 2 includes a housing 21, a tubular output shaft 22, a multiplate clutch 23, and an actuator 24. The housing 21 is fixed to a rear differential case 154, described later, of the rear differential 15. The output shaft 22 is supported coaxially with the housing 21 such that the output shaft 22 can rotate relative to the housing 21. The multiplate clutch 23 is accommodated in the housing 21. The actuator 24 presses the multiplate clutch 23. One end of the output shaft 22 is connected to the drive shaft 17R for the right rear wheel 20R, and a side gear shaft 156 that rotates integrally with (i.e., together with) the rear differential 15 is connected to the other end of output shaft 22. The multiplate clutch 23 includes a plurality of outer clutch plates 23a that rotate integrally with the housing 21 and a plurality of inner clutch plates 23b that rotate integrally with the output shaft 22. The outer clutch plates 23a and the inner clutch plates 23b frictionally contact each other when they receive the pressing force of the actuator 24.

The actuator 24 includes, for example, a ball cam mechanism that converts a rotational force to an axial pressing force and an electromagnetic clutch mechanism or an electric motor that operates the ball cam mechanism. The actuator 24 presses the multiplate clutch 23 with a pressing force according to the electric current supplied from the control device 7. The control device 7 is capable of continuously increasing or decreasing the differential limiting force that is generated by the differential limiting device 2 by increasing or decreasing the electric current that is supplied to the actuator 24.

The driving force of the engine 11 is transmitted to the front wheels 10R, 10L via the transmission 12, the center differential 13A, the front differential 13, and the drive shafts 16R, 16L for the right and left front wheels 10R, 10L. The front differential 13 includes a pair of side gears 134R, 134L, a pair of pinion gears 133, a pinion pin 132, and a front differential case 131 accommodating these components. The side gears 134R, 134L are respectively coupled to the drive shafts 16R, 16L for the right and left front wheels 10R, 10L such that the side gears 134R, 134L are not rotatable relative to the drive shafts 16R, 16L. The pinion gears 133 mesh with the side gears 134R, 134L such that the axes of the pinion gears 133 are perpendicular to the axes of the side gears 134R, 134L. The pinion pin 132 supports the pinion gears 133.

The center differential 13A includes a pair of side gears 136R, 136L, a pair of pinion gears 137, a pinion pin 138, and a center differential case 139 accommodating these components, and a final gear 130. The side gears 136R, 136L are coupled to a ring gear 135 and the front differential case 131, respectively. The pinion gears 137 mesh with the side gears 136R, 136L such that the axes of the pinion gears 137 are perpendicular to the axes of the side gears 136R, 136L. The pinion pin 138 supports the pinion gears 137. The final gear 130 is coupled to the center differential case 139 and transmits the driving force from the transmission 12. A pinion gear 141 provided on the front end of the propeller shaft 14 in the longitudinal direction (front-rear direction) of the vehicle meshes with the ring gear 135. A pinion gear 142 provided on the rear end of the propeller shaft 14 in the longitudinal direction of the vehicle meshes with a ring gear 155 of the rear differential 15.

The rear differential 15 includes a pair of side gears 151R, 151L, a pair of pinion gears 152, a pinion pin 153, a rear differential case 154 accommodating these components, a ring gear 155, and a side gear shaft 156. The side gears 151R, 151L are respectively coupled to the drive shafts 17R, 17L for the right and left rear wheels 20R, 20L such that the side gears 151R, 151L are not rotatable relative to the drive shafts 17R, 17L. The pinion gears 152 mesh with the side gears 151R, 151L such that the axes of the pinion gears 152 are perpendicular to the axes of the side gears 151R, 151L. The pinion pin 153 supports the pinion gears 152. The ring gear 155 is fixed to the rear differential case 154. The side gear shaft 156 is coupled to the side gear 151R such that the side gear shaft 156 is not rotatable relative to the side gear 151R.

As shown in FIG. 2, the control device 7 includes, for example, a wireless communication unit 70, a control unit 71, a storage unit 72, and a current output circuit 73. The wireless communication unit 70 wirelessly communicates with the outside such as an expressway traffic control center. The current output circuit 73 supplies an electric current to the actuator 24. The control device 7 is configured to receive various detection values including the detection values of the rotational speed sensors 101 to 104 that respectively detect the rotational speeds of the wheels 10L, 10R, 20L, 20R, the yaw rate sensor 105 that detects the yaw rate, and the lateral G sensor 106.

The control unit 71 includes a central processing unit (CPU) and its peripheral circuits. The CPU of the control unit 71 operates according to a program 720 stored in the storage unit 72 to function as a crosswind information obtaining unit 710, a lateral wind velocity calculating unit 711, a differential limiting control unit 712, etc. In other words, the control unit 71 is an electronic control unit.

The storage unit 72 includes memory devices such as a read only memory (ROM) and a random access memory (RAM). The storage unit 72 stores various kinds of information such as the program 720 and the map 721. For example, electric current values corresponding to the values of the lateral wind velocity are defined in the map 721. The lateral wind velocity is a lateral component (i.e., a component in a vehicle-width direction) of the velocity of the wind to which the four-wheel drive vehicle 1 is subjected, and the lateral wind velocity is used to control the differential limiting device 2.

When the vehicle traveling on a road reaches a communication region located before (behind in the direction of travel) a predetermined region (hereinafter sometimes referred to as the "crosswind caution region") 91 (see FIGS. 4A, 4B), the crosswind information obtaining unit 710 communicates with the outside via the wireless communication unit 70 to obtain crosswind information on the nearest crosswind caution region 91 located ahead in the direction of travel. The crosswind information contains, for example, the wind velocity Vw (see FIG. 3), the direction (azimuth orientation) of wind, etc. The crosswind caution region 91 herein refers to a region where a crosswind tends to blow. Examples of the crosswind caution region 91 include a region near a tunnel exit, a region over a bridge, and a gap between noise barriers. The communication region herein refers to a region where the vehicle can wirelessly communicate with the outside. For example, the communication region may be located near a tunnel entrance or further before the tunnel entrance.

An example of the outside with which the wireless communication unit 70 communicates is the expressway traffic control center. The crosswind information obtaining unit 710 may communicate with the expressway control traffic center to receive intelligent transport system (ITS) information and obtain crosswind information from the ITS information. The ITS information contains, for example, information on an icy road ahead in the direction of travel, crosswind information on a region near a tunnel exit, and the presence of a stopped vehicle ahead in the direction of travel. The crosswind information obtaining unit 710 may obtain crosswind information from an anemometer installed on a roadside or may obtain crosswind information via a car navigation system 8.

Next, the lateral wind velocity calculating unit 711 and the differential limiting control unit 712 will be described with reference to FIG. 3. In FIG. 3, Vw represents the wind velocity obtained from crosswind information, Vy represents the component of the wind velocity Vw in a direction perpendicular to a side surface 10a of a vehicle body 10A (lateral wind velocity), θw represents the angle of the direction (azimuth orientation) of wind with respect to the direction (direction of travel) of the vehicle (i.e., wind direction angle).

When the vehicle traveling forward enters the crosswind caution region 91, the side surface 10a of the vehicle body 10A is suddenly subjected to a crosswind. The lateral wind velocity calculating unit 711 calculates the lateral wind velocity in a direction perpendicular to the side surface 10a of the vehicle body 10A. The lateral wind velocity calculating unit 711 obtains position information on the entry point to the crosswind caution region 91 (i.e., information on the position of the entry point to the crosswind caution region 91) and position information on the exit point from the crosswind caution region 91 (i.e., information on the position of the exit point from the crosswind caution region 91), along with the wind velocity and the wind direction, etc., from the outside. The lateral wind velocity calculating unit 711 may obtain position information on a measuring device that has measured a crosswind and set a position located within a predetermined distance from the position of the measuring device as the crosswind caution region 91. Alternatively, the car navigation system 8 may obtain from the outside the position information on the measuring device that has measured a crosswind, and the lateral wind velocity calculating unit 711 may obtain from the car navigation system 8 position information on a region near the exit of a tunnel, a bridge, etc. located near the position of the measuring device, as position information on the crosswind caution region 91.

The lateral wind velocity calculating unit 711 obtains the direction (direction of travel) of the vehicle from the car navigation system 8, calculates the wind direction angle θw with respect to the direction of travel of the vehicle from the direction (direction of travel) of the vehicle and the direction (azimuth orientation) of wind contained in the crosswind information, and calculates Vw·sinθw from the wind direction angle θw and the wind velocity Vw contained in the crosswind information to calculate the lateral wind velocity Vy. The lateral wind velocity calculating unit 711 may obtain the wind direction angle θw calculated by the car navigation system 8.

When the vehicle is approaching (e.g., 50 m before) the crosswind caution region 91 as shown in FIG. 4A, that is, when the separation distance between the current position of the vehicle and the position of the crosswind caution region 91 becomes smaller than a predetermined distance, the differential limiting control unit 712 obtains the electric current value corresponding to the lateral wind velocity Vy from the map 721 in the storage unit 72, and based on the obtained electric current value, supplies an electric current from the current output circuit 73 to the actuator 24 of the differential limiting device 2 to cause the differential limiting device 2 to generate a differential limiting force according to the electric current in order to prepare for a vehicle behavior that will be caused by the crosswind.

The differential limiting control unit 712 may obtain the speed of the vehicle, information on the current position, and information on the position of the crosswind caution region 91, estimate the time at which the vehicle reaches the crosswind caution region 91 based on the speed of the vehicle, the information on the current position, and the information on the position of the crosswind caution region 91, and control the differential limiting device 2 to generate a differential limiting force a predetermined time before the estimated time at which the vehicle reaches the crosswind caution region 91. Alternatively, the differential limiting control unit 712 may repeatedly estimate the time until the vehicle reaches the crosswind caution region 91, and control the differential limiting device 2 to generate a differential limiting force when the estimated time until the vehicle reaches the crosswind caution region 91 is less than a predetermined time. The differential limiting control unit 712 may obtain the time (time point) predicted by the car navigation system 8 as information on the time (time point).

In the case where a differential limiting force has been already generated by the differential limiting device 2 when the crosswind information obtaining unit 710 obtains the crosswind information, the differential limiting control unit 712 controls the differential limiting device 2 such that the differential limiting device 2 generates a differential limiting force obtained by adding a differential limiting force according to the wind velocity or the lateral wind velocity to the differential limiting force that has been already generated.

In the case where the influence (impact) of the crosswind on the vehicle behavior becomes greater than an influence expected based on the crosswind information obtained by the crosswind information obtaining unit 710 (in other words, in the case where the vehicle behavior due to the crosswind becomes larger, i.e., increases) after the crosswind information obtaining unit 710 obtains the crosswind information, the differential limiting control unit 712 increases the differential limiting force. In the case where the influence (impact) of the crosswind on the vehicle behavior becomes smaller than an influence expected based on the crosswind information obtained by the crosswind information obtaining unit 710 (in other words, in the case where the vehicle behavior due to the crosswind becomes smaller, i.e., decreases) after the crosswind information obtaining unit 710 obtains the crosswind information, the differential limiting control unit 712 maintains the differential limiting force. That is, the differential limiting force that is generated by the differential limiting control unit 712 has downward rigidity (in other words, the differential limiting force is unlikely to be reduced). This reduces the possibility that unstable vehicle behavior occurs due to the differential limiting force being excessively (accidentally) reduced.

After the vehicle passes the position at which the crosswind is measured, namely after the vehicle leaves the crosswind caution region 91, the differential limiting control unit 712 controls the differential limiting device 2 such that the differential limiting device 2 generates a differential limiting force according to the vehicle behavior based on the difference between rotational speeds of the front and rear wheels, the steering angle of a steering wheel 18, etc. or based on the detection values of the yaw rate sensor 105 and the lateral G sensor 106. In the case where the differential limiting force according to the vehicle behavior is larger than the differential limiting force according to the vehicle speed or the lateral wind velocity, it is necessary to quickly change the differential limiting force to the differential limiting force according to the vehicle behavior in order to stabilize the vehicle behavior. However, for example, in the case where the differential limiting force according to the vehicle behavior is smaller than the differential limiting force according to the vehicle speed or the lateral wind velocity, the vehicle behavior may become unstable if the differential limiting force is suddenly reduced. Accordingly, in this case, the differential limiting force is gradually changed (reduced) to the differential limiting force according to the vehicle behavior.

Operation of the present embodiment will be described. An example of a process that is executed by the control unit 71 of the control device 7 will be described with reference to FIG. 5. FIG. 5 is a flowchart illustrating the process that is executed by the control unit 71 when the vehicle (i.e., host vehicle) travels forward from the area before the crosswind caution region 91 and enters the crosswind caution region 91.

The crosswind information obtaining unit 710 determines whether the vehicle (i.e., host vehicle) has reached a communication region located before the crosswind caution region 91 (S1). It is herein assumed that the crosswind caution region 91 is set near the exit of a tunnel 90, and the communication region is set before the tunnel 90.

When the crosswind information obtaining unit 710 determines that the vehicle has reached the communication region (S1: Yes), the crosswind information obtaining unit 710 communicates with the outside to obtain crosswind information (S2). When the vehicle is traveling straight before the vehicle reaches the crosswind caution region 91, the rotational speed of the left rear wheel 20L is equal to that of the right rear wheel 20R.

Next, the lateral wind velocity calculating unit 711 obtains the direction (direction of travel) of the vehicle from the car navigation system 8, calculates the wind direction angle θw (see FIG. 3) from the direction (direction of travel) of the vehicle and the direction (azimuth orientation) of wind contained in the crosswind information, and calculates the lateral wind velocity Vy from the wind velocity Vw contained in the crosswind information and the wind direction angle θw (S3).

The differential limiting control unit 712 then determines whether the vehicle is located near the crosswind caution region 91 (e.g., whether the vehicle is located at a position 50 m before the crosswind caution region 91) (S4). The differential limiting control unit 712 can determine whether the vehicle is located near the crosswind caution region 91 by obtaining information on the vehicle position and information on the position of the crosswind caution region 91 from, for example, the car navigation system 8.

When the differential limiting control unit 712 determines that the vehicle is located near the crosswind caution region 91 (S4: Yes), the differential limiting control unit 712 obtains the electric current value corresponding to the lateral wind velocity from the map 721 stored in the storage unit 72 and supplies an electric current from the current output circuit 73 to the actuator 24 of the differential limiting device 2 based on the obtained electric current value to cause the differential limiting device 2 to generate a differential limiting force according to the crosswind, thereby restraining a change in vehicle behavior due to the crosswind (S5). When the differential limiting control unit 712 determines that the vehicle is not located near the crosswind caution region 91 (S4: No), the control unit 71 repeats step S2 and the subsequent steps.

When the entire side surface 10a of the vehicle body 10A starts to face the crosswind as shown in FIG. 4B, the differential limiting control unit 712 causes the differential limiting device 2 to generate a differential limiting force according to the vehicle behavior, based on the detection values of the yaw rate sensor 105 and the lateral G sensor 106.

Functions and effects of the first embodiment will be described. According to the first embodiment, the differential limiting device 2 is controlled to generate a differential limiting force corresponding to the lateral wind velocity when the vehicle is located near the crosswind caution region 91. Accordingly, the differential limiting device 2 has already generated a differential limiting force when the vehicle enters the crosswind caution region 91. This configuration further improves crosswind stability of the vehicle.

If the differential limiting device 2 is operated after it is detected that the vehicle is subjected to a crosswind, it takes a certain amount of time until the differential limiting device 2 generates a differential limiting force due to a delay time in operation of the actuator 24, the multiplate clutch 23, etc. of the differential limiting device 2. The vehicle behavior may become unstable during this time. According to the present embodiment, however, the differential limiting device 2 generates a differential limiting force before the vehicle reaches the crosswind caution region 91. Crosswind stability of the vehicle is therefore further improved.

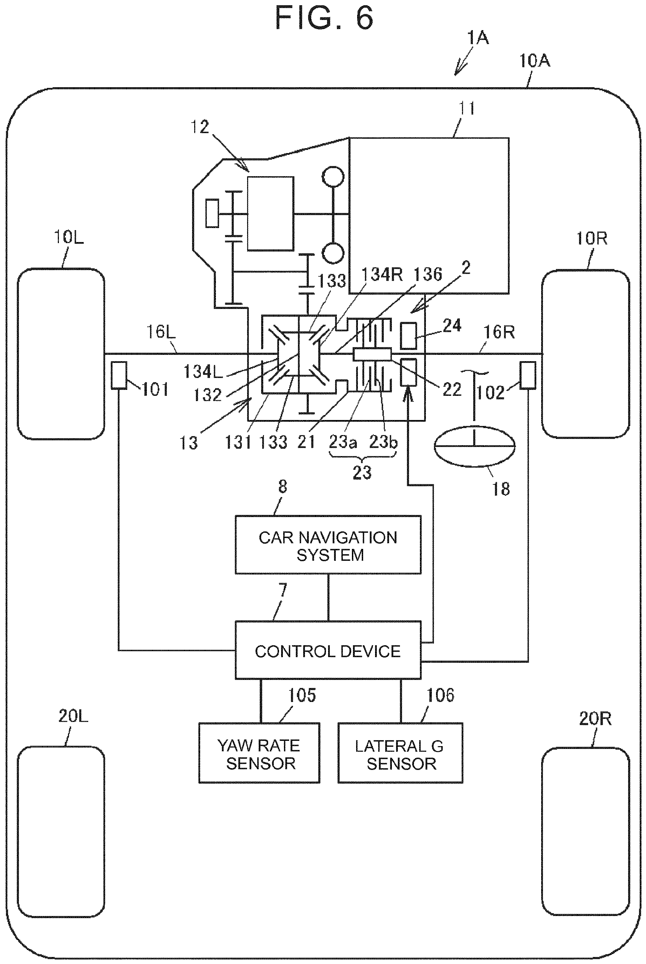

FIG. 6 is a configuration diagram schematically illustrating an example of the configuration of a front-wheel drive vehicle 1A according to a second embodiment of the invention. In FIG. 6 and the subsequent figures, the same components as those described in the first embodiment are denoted with the same reference numerals and characters as those in FIG. 1, and repetitive description will be omitted.

In the first embodiment, the differential limiting device 2 is mounted on the rear wheels 20R, 20L-side of the four-wheel drive vehicle 1. In the present embodiment, however, the differential limiting device 2 is mounted on the front wheels 10R, 10L-side of the front-wheel drive vehicle 1A. The front-wheel drive vehicle 1A is an example of the vehicle. The front-wheel drive vehicle 1A including the control device 7 is hereinafter sometimes referred to as the vehicle.

The differential limiting device 2 limits the difference between rotational speeds of right and left front wheels 10R, 10L. The differential limiting device 2 includes a housing 21, a tubular output shaft 22, a multiplate clutch 23, and an actuator 24. The housing 21 is fixed to the front differential case 131 of the front differential 13. The output shaft 22 is supported coaxially with the housing 21 such that the output shaft 22 can rotate relative to the housing 21. The multiplate clutch 23 is accommodated in the housing 21. The actuator 24 presses the multiplate clutch 23. One end of the output shaft 22 is connected to the drive shaft 16R for the right front wheel 10R, and a side gear shaft 136 is connected to the other end of the output shaft 22. The side gear shaft 136 is coupled to the side gear 134R of the front differential 13 such that the side gear shaft 136 is not rotatable relative to the side gear 134R.

The control device 7 is capable of continuously increasing or decreasing the differential limiting force that is generated by the differential limiting device 2 by increasing or decreasing an electric current that is supplied to the actuator 24.

Functions and effects of the second embodiment will be described. According to the second embodiment, as in the first embodiment, the differential limiting device 2 generates a differential limiting force before the vehicle reaches the crosswind caution region 91, and thus, the differential between the right and left front wheels 10R, 10L is limited. Crosswind stability of the vehicle is therefore further improved.

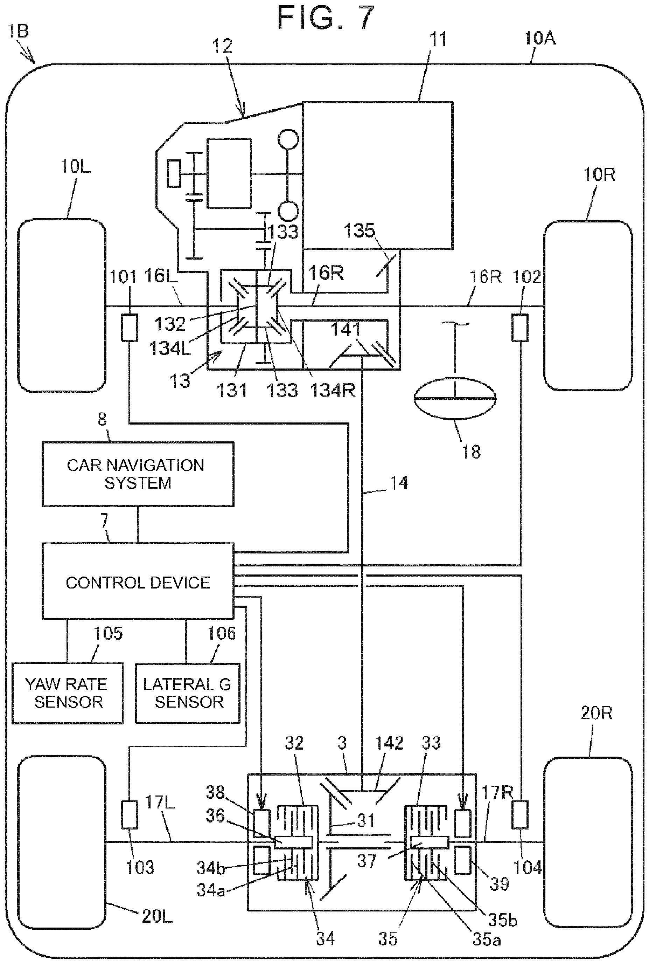

FIG. 7 is a configuration diagram schematically illustrating an example of the configuration of a four-wheel drive vehicle 1B according to a third embodiment of the invention. In the first embodiment, the differential limiting device 2 is mounted on the rear wheels 20R, 20L-side of the four-wheel drive vehicle 1. In the present embodiment, however, a right-left driving force distribution device 3 is mounted instead of the differential limiting device 2. The right-left driving force distribution device 3 is capable of adjusting the driving forces that are distributed to the right and left rear wheels 20R, 20L. The control device 7 controls the right-left driving force distribution device 3. The four-wheel drive vehicle 1B including the control device 7 is hereinafter sometimes referred to as the vehicle.

The right-left driving force distribution device 3 that functions as a differential limiting device is capable of individually limiting the difference between rotational speeds of the propeller shaft 14 and the right rear wheel 20R and the difference between rotational speeds of the propeller shaft 14 and the left rear wheel 20L. The right-left driving force distribution device 3 is also capable of limiting the difference between the rotational speeds of the right and left rear wheels 20R, 20L. The right-left driving force distribution device 3 distributes the driving force received from the propeller shaft 14 to the right and left rear wheels 20R, 20L through the drive shafts 17R, 17L for the rear wheels 20R, 20L. The right-left driving force distribution device 3 includes a ring gear 31, first and second clutch housings 32, 33, first and second multiplate clutches 34, 35, first and second output shafts 36, 37, and first and second actuators 38, 39. The ring gear 31 meshes with the pinion gear 142 provided on the rear end of the propeller shaft 14. The first and second clutch housings 32, 33 rotate integrally with (i.e., together with) the ring gear 31. The first and second multiplate clutches 34, 35 are accommodated in the first and second clutch housings 32, 33, respectively. The driving force is transmitted to the first and second output shafts 36, 37 via the first and second multiplate clutches 34, 35, respectively. The first and second actuators 38, 39 press the first and second multiplate clutches 34, 35, respectively.

The ring gear 31 and the first and second clutch housings 32, 33 are arranged in the lateral direction (i.e., the vehicle-width direction) of the vehicle and rotate about a rotation axis extending in the lateral direction of the vehicle. The driving force is transmitted to the left rear wheel 20L through the first output shaft 36 and the drive shaft 17L that rotates together with the first output shaft 36. The driving force is transmitted to the right rear wheel 20R through the second output shaft 37 and the drive shaft 17R that rotates together with the second output shaft 37.

The first multiplate clutch 34 includes a plurality of outer clutch plates 34a that rotate integrally with (i.e., together with) the first clutch housing 32 and a plurality of inner clutch plates 34b that rotate integrally with (i.e., together with) the first output shaft 36. When receiving a pressing force from the first actuator 38, the outer clutch plates 34a and the inner clutch plates 34b frictionally contact each other. Similarly, the second multiplate clutch 35 includes a plurality of outer clutch plates 35a that rotate integrally with (i.e., together with) the second clutch housing 33 and a plurality of inner clutch plates 35b that rotate integrally with (i.e., together with) the second output shaft 37. When receiving a pressing force from the second actuator 39, the outer clutch plates 35a and the inner clutch plates 35b frictionally contact each other.

Each of the first and second actuators 38, 39 includes, for example, a ball cam mechanism that converts a rotational force into an axial pressing force and an electromagnetic clutch mechanism or an electric motor that operates the ball cam mechanism. The first and second actuators 38, 39 press the first and second multiplate clutches 34, 35, respectively, with a pressing force according to the electric current received from the control device 7. The control device 7 is capable of controlling the driving forces that are distributed to the right and left rear wheels 20R, 20L by increasing or decreasing the electric currents supplied to the second actuator 39 and the first actuator 38, respectively.

The control device 7 is capable of limiting the differential between the right and left rear wheels 20R, 20L supplying the same electric current to the first and second actuators 38, 39. In this case, the frictional forces of the first and second multiplate clutches 34, 35 serve as a differential limiting force that limits the differential between the right and left rear wheels 20R, 20L. That is, the right-left driving force distribution device 3 functions as a limited split differential capable of limiting the differential between the right and left rear wheels 20R, 20L. The control device 7 can also limit the difference between rotational speeds of the front and rear wheels, which is the difference between the average rotational speed of the right and left front wheels 10R, 10L and the average rotational speed of the right and left rear wheels 20R, 20L, by the electric currents that are supplied to the first and second actuators 38, 39.

Functions and effects of the third embodiment will be described. According to the third embodiment, as in the first embodiment, the right-left driving force distribution device 3 generates a differential limiting force before the vehicle reaches the crosswind caution region 91, and thus, the differential between the right and left rear wheels 20R, 20L is limited. This configuration further improves crosswind stability of the vehicle.

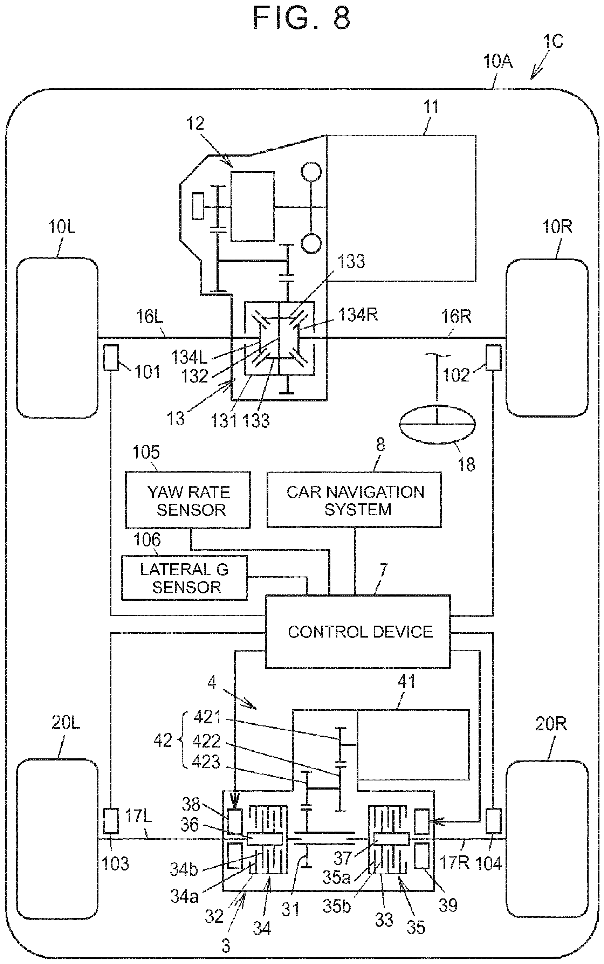

FIG. 8 is a configuration diagram schematically illustrating an example of the configuration of a four-wheel drive vehicle 1C according to a fourth embodiment of the invention. The first and third embodiments are described with respect to the case where the driving force of the engine 11 is distributed to both the front wheels 10R, 10L and the rear wheels 20R, 20L. In the present embodiment, the four-wheel drive vehicle 1C is configured such that the driving force of the engine 11 is transmitted to the front wheels 10R, 10L and the driving force of an electric motor 41 of an auxiliary drive device 4 is transmitted to the rear wheels 20R, 20L.

In the present embodiment, a right-left driving force distribution device 3 similar to that described in the third embodiment is mounted on the rear wheels 20R, 20L-side of the four-wheel drive vehicle 1C. As in the third embodiment, the right-left driving force distribution device 3 is controlled by the control device 7 and functions also as a differential limiting device. The four-wheel drive vehicle 1C including the control device 7 is hereinafter sometimes referred to as the vehicle.

The rotational speed of the output of the electric motor 41 of the auxiliary drive device 4 is reduced by a reduction gear mechanism 42, and then the driving force of the electric motor 41 is transmitted to the right-left driving force distribution device 3. The reduction gear mechanism 42 includes a pinion gear 421 fixed to a shaft of the electric motor 41, a large-diameter gear portion 422 meshing with the pinion gear 421, and a small-diameter gear portion 423 meshing with the ring gear 31 of the right-left driving force distribution device 3. The large-diameter gear portion 422 and the small-diameter gear portion 423 are coupled so as not to be rotatable relative to each other.

According to the fourth embodiment, as in the first embodiment, the right-left driving force distribution device 3 generates a differential limiting force before the vehicle reaches the crosswind caution region 91, and thus, the differential between the right and left rear wheels 20R, 20L is limited. This configuration further improves crosswind stability of the vehicle.

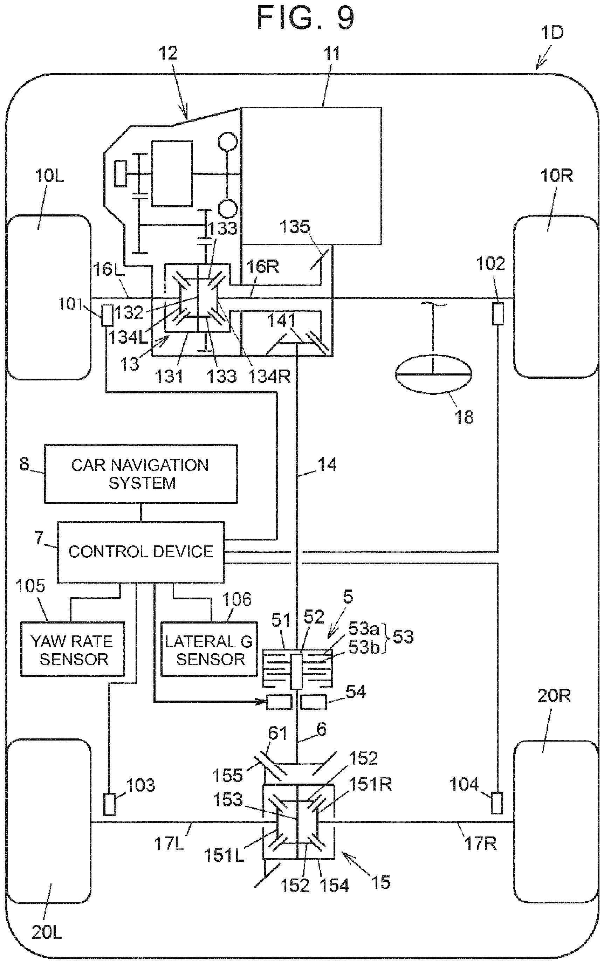

FIG. 9 is a configuration diagram schematically illustrating an example of the configuration of a four-wheel drive vehicle 1D according to a fifth embodiment of the invention. The first embodiment is described with respect to the case where the differential limiting device 2 is disposed between the rear differential 15 and the drive shaft 17R for the right rear wheel 20R. In the four-wheel drive vehicle 1D according to the present embodiment, a front-rear driving force distribution device 5 is disposed between the propeller shaft 14 and the rear differential 15. The front-rear driving force distribution device 5 is controlled by the control device 7 and functions as a differential limiting device that limits the difference between rotational speeds of the front and rear wheels. The four-wheel drive vehicle 1D including the control device 7 is hereinafter sometimes referred to as the vehicle.

The front-rear driving force distribution device 5 includes a housing 51, a tubular output shaft 52, a multiplate clutch 53, and an actuator 54. The rear end of the propeller shaft 14 in the longitudinal direction of the vehicle is coupled to the housing 51. The output shaft 52 is supported coaxially with the housing 51 such that the output shaft 52 can rotate relative to the housing 51. The multiplate clutch 53 is accommodated in the housing 51. The actuator 54 presses the multiplate clutch 53. The multiplate clutch 53 includes a plurality of outer clutch plates 53a that rotate integrally with (i.e., together with) the housing 51 and a plurality of inner clutch plates 53b that rotate integrally with (i.e., together with) the output shaft 52. The outer clutch plates 53a and the inner clutch plates 53b frictionally contact each other when they receive the pressing force of the actuator 54.

The four-wheel drive vehicle 1D includes a pinion gear shaft 6 coupled to the output shaft 52 of the front-rear driving force distribution device 5 such that the pinion gear shaft 6 is not rotatable relative to the output shaft 52. The pinion gear shaft 6 has a pinion gear 61 on an end opposite to the output shaft 52. The pinion gear 61 meshes with the ring gear 155 of the rear differential 15. With this configuration, the rotational force of the propeller shaft 14 is transmitted to the rear differential 15 of the front-rear driving force distribution device 5 through the front-rear driving force distribution device 5 and the pinion gear shaft 6.

The differential limiting control unit 712 of the control device 7 performs control to supply an electric current corresponding to an estimated crosswind yaw moment to the actuator 54 of the front-rear driving force distribution device 5 such that the front-rear driving force distribution device 5 generates a differential limiting force. The front-rear driving force distribution device 5 thus limits the differential between the front wheels 10R, 10L and the rear wheels 20R, 20L.

Functions and effects of the fifth embodiment will be described. According to the fifth embodiment, the front-rear driving force distribution device 5 generates a differential limiting force before the vehicle reaches the crosswind caution region 91, and thus the differential between the front wheels 10R, 10L and the rear wheels 20R, 20L is limited. Crosswind stability of the vehicle is therefore further improved.

Although the invention is described above based on the embodiments, these embodiments are not intended to limit the invention.

The invention may be modified as appropriate without departing from the scope of the invention. For example, the configurations of the vehicle illustrated in FIGS. 1 and 6 to 9 may be modified. An electric motor may be used as a driving source instead of the engine 11 that is an internal combustion engine, or a hybrid system that is a combination of the engine 11 and the electric motor may be used as a driving source. In the case where information on the wind direction cannot be obtained, the above control may be performed so that the differential limiting device generates a differential limiting force according to the wind velocity before the vehicle reaches the crosswind caution region 91.

A control device for a differential limiting device is provided. The differential limiting device limits at least one of a difference between rotational speeds of right and left wheels of a vehicle and a difference between rotational speeds of front and rear wheels of the vehicle. The control device includes an electronic control unit (71) configured to obtain crosswind information on a crosswind to which the vehicle is to be subjected in a predetermined region located ahead in a direction of travel of the vehicle, and to perform control to generate a differential limiting force based on the crosswind information.

## Claims

1. A control device for a differential limiting device that limits at least one of a difference between rotational speeds of right and left wheels of a vehicle and a difference between rotational speeds of front and rear wheels of the vehicle, the control device **characterized by** comprising
an electronic control unit (71) configured to obtain crosswind information on a crosswind to which the vehicle is to be subjected in a predetermined region located ahead in a direction of travel of the vehicle, and to perform control to generate a differential limiting force based on the crosswind information.

2. The control device according to claim 1, wherein:
the crosswind information contains at least a wind velocity and a wind direction; and
the electronic control unit (71) controls the differential limiting device such that the differential limiting device generates the differential limiting force according to the wind velocity or the wind velocity and the wind direction.

3. The control device according to claim 1 or 2, wherein the electronic control unit (71) obtains information on a current position of the vehicle and information on a position of the predetermined region, and controls the differential limiting device such that the differential limiting device generates the differential limiting force before the vehicle reaches the predetermined region.

4. The control device according to claim 3, wherein when a separation distance between the current position of the vehicle and the position of the predetermined region becomes smaller than a predetermined distance, the electronic control unit (71) controls the differential limiting device such that the differential limiting device generates the differential limiting force.

5. The control device according to claim 3, wherein the electronic control unit (71) further obtains information on a speed of the vehicle, estimates a time at which the vehicle reaches the predetermined region based on the speed of the vehicle, the current position of the vehicle, and the position of the predetermined region, and controls the differential limiting device such that the differential limiting device generates the differential limiting force before the estimated time at which the vehicle reaches the predetermined region.

6. The control device according to any one of claims 1 to 5, wherein in a case where the differential limiting force has been already generated by the differential limiting device when the electronic control unit (71) obtains the crosswind information, the electronic control unit (71) controls the differential limiting device such that the differential limiting device generates the differential limiting force obtained by adding the differential limiting force according to a wind velocity to the differential limiting force that has been already generated.

7. The control device according to any one of claims 1 to 6, **characterized by** further comprising a detector configured to detect a behavior of the vehicle, wherein the electronic control unit (71) increases the differential limiting force when the detected behavior of the vehicle increases after the electronic control unit (71) obtains the crosswind information, and maintains the differential limiting force when the detected behavior of the vehicle decreases after the electronic control unit (71) obtains the crosswind information.

8. The control device according to any one of claims 1 to 7, **characterized by** further comprising a detector configured to detect a behavior of the vehicle, wherein after the vehicle leaves the predetermined region, the electronic control unit (71) performs control to generate the differential limiting force according to the detected behavior of the vehicle.

9. The control device according to claim 8, wherein after the vehicle leaves the predetermined region, the electronic control unit (71) gradually changes the differential limiting force according to a wind velocity or the wind velocity and a wind direction to the differential limiting force according to the detected behavior of the vehicle when the differential limiting force according to the detected behavior of the vehicle is smaller than the differential limiting force according to the wind velocity or the wind velocity and the wind direction.
